# EUROPÄISCHE PATENTSCHRIFT

(11) **EP 0 576 461 B1**
(45) Veröffentlichungstag und Bekanntmachung des Hinweises auf die Patenterteilung: **01.05.1996**
(21) Anmeldenummer: 92905943.4
(22) Anmeldetag: 26.02.1992
(51) Int. Cl.: G02B 26/02

(54) **OPTISCHER SCHALTER**
OPTICAL SWITCH
COMMUTATEUR OPTIQUE

(30) Priorität: 18.03.1991 DE 4109195
(43) Veröffentlichungstag der Anmeldung: 05.01.1994
(73) Patentinhaber: SIEMENS AKTIENGESELLSCHAFT, D-80333 München (DE)
(72) Erfinder: BRUCH, Helmut, D-1000 Berlin 20 (DE); KNEIER, Michael, D-1000 Berlin 21 (DE); STECKENBORN, Arno, D-1000 Berlin 20 (DE); SCHLAAK, Helmut, D-1000 Berlin 33 (DE)
(86) Internationale Anmeldenummer: DE9200159
(87) Internationale Veröffentlichungsnummer: WO9216866

(56) Entgegenhaltungen:
- EP-A- 0 098 815
- EP-A- 0 298 260
- EP-A- 0 459 776
- WO-A-85/01803
- WO-A-91/11744
- Transactions of the Institute of Electronics and Communication, Band E70, Nr. 8, August 1987, (Tokyo, JP) S.Nagasawa et al.: "A new type of optical switch with a plastic molded ferrule", Seiten 696-698
- Proceedings of the IEEE, Band 70, Nr. 5, May 1982 (New York, US) K.E. Petersen: "Silicon as a mechanical material", Seiten 420-457

## Beschreibung

Die Erfindung bezieht sich auf einen optischen Schalter mit einer ersten, zur Ausführung eines Schaltvorganges zwischen verschiedenen Schaltpositionen bewegbaren Siliziumplatte, und mit einer zweiten, ortsfesten Siliziumplatte, die jeweils V-Nuten zur Zentrierung von Lichtwellenleitern aufweisen und mit einer Vorrichtung zur Führung der bewegbaren Siliziumplatte bei einer Schaltbewegung.

Ein solcher optischer Schalter ist beispielsweise aus der europäischen Patentanmeldung EP-A1-0 298 260 bekannt. Bei dem dort beschriebenen Schalter sind zwei gegeneinander bewegbare Siliziumplatten vorgesehen, die an ihren Oberseiten Zentriernuten zur Führung von Lichtwellenleitern aufweisen. Die bewegbare Siliziumplatte ist dort mittels einer M-Feder in ihrer Schaltbewegung geführt. Die M-Feder soll eine Parallelführung der bewegbaren Siliziumplatte bei der Schaltbewegung gewährleisten.

Der Erfindung liegt die Aufgabe zugrunde, einen optischen Schalter der eingangs genannten Art so zu gestalten, daß auf konstruktiv einfache Weise eine präzise Führung der bewegbaren Siliziumplatte gewährleistet ist.

Die Aufgabe wird bei einem Schalter der eingangs genannten Art dadurch gelöst, daß die Vorrichtung zur Führung der bewegbaren Siliziumplatte aus wenigstens einer quer zur Längsachse der Lichtwellenleiter verlaufenden, als Ausnehmung oder Vorsprung eines ortsfesten Teiles ausgebildeten Schiene und einem komplementär zur Schiene ausgebildeten Führungselement der bewegbaren Siliziumplatte besteht.

Die Vorrichtung zur Führung der bewegbaren Siliziumplatte kann beispielsweise aus einer als Vorsprung ausgebildeten Schiene bestehen, die an einer Grundplatte befestigt ist, über die sich die bewegbare Siliziumplatte bei einem Schaltvorgang bewegt. Die bewegbare Siliziumplatte weist dazu an ihrer Unterseite eine Ausnehmung auf, die die Schiene wenigstens teilweise aufnimmt und an deren Begrenzungsflächen die Schiene gleitet.

Die Schiene verläuft vorzugsweise senkrecht zur Längsachse der in den Zentriernuten der Siliziumplatten geführten Lichtwellenleiter. Die Stirnflächen der miteinander zu koppelnden Lichtwellenleiter liegen dann alle in einer Ebene und der bei einer Schaltbewegung zurückgelegte Weg wird klein gehalten.

In dem Fall, daß die Schiene auf einer Grundplatte befestigt ist, kann auf dieser Grundfläche auch die ortsfeste Siliziumplatte vorteilhaft befestigt werden. Es ist auch denkbar, daß die ortsfeste Siliziumplatte einen Fortsatz aufweist, der die Schiene trägt. Wichtig ist dabei, daß die Position der Schiene gegenüber der Position der ortsfesten Siliziumplatte genau so festgelegt ist, daß die bewegbare Siliziumplatte nach dem Aufsetzen auf die Schiene sich in einer genau festgelegten Entfernung von der ortsfesten Siliziumplatte befindet.

Dadurch, daß die wenigstens eine Schiene durch Ätzen eines Siliziumteiles geschaffen ist, ist die Form der Schiene sehr genau und reproduzierbar festgelegt. Dies ist Voraussetzung für eine genaue Passung der Schiene und des Führungselementes der beweglichen Siliziumplatte. Das Führungselement der Siliziumplatte kann ebenfalls durch Ätzen hergestellt sein. Dadurch ergibt sich eine spielfreie Passung und eine genaue Festlegung der Bewegung der bewegbaren Siliziumplatte während eines Schaltvorganges.

Um die Schaltbewegung in wenigstens einer Schaltposition exakt zu begrenzen, ist es vorteilhaft, daß das Siliziumteil wenigstens eine Ausnehmung und/oder einen Vorsprung aufweist, deren Begrenzungsflächen wenigstens einen Anschlag für die bewegbare Siliziumplatte bilden. In diesem Fall kann die Position eines mechanischen Anschlages so festgelegt werden, daß in der auf diese Weise festgelegten Schaltposition die zu koppelnden Lichtwellenleiter in den Zentriernuten der beiden Siliziumplatten miteinander fluchten. Dies ist besonders leicht zu gewährleisten, wenn die ortsfeste Siliziumplatte mit dem Siliziumteil fest verbunden ist.

Dann ist beispielsweise die Schiene direkt an einem Fortsatz der ortsfesten Siliziumplatte befestigt oder mit der ortsfesten Siliziumplatte über eine Grundplatte verbunden. Insbesondere, wenn die ortsfeste Siliziumplatte mit der Schiene einstückig verbunden ist, erweist es sich als vorteilhaft, wenn die Vorsprünge oder Ausnehmungen durch Ätzen des Siliziumteils gebildet sind. In diesem Fall läßt sich durch Ätzen der Zentriernuten für die Lichtwellenleiter und der Schiene in einem einzigen Ätzvorgang die relative Positionierung der ortsfesten Siliziumplatte gegenüber der Schiene mit der erforderlichen Genauigkeit leicht einhalten. Es brauchen dann nach dem Zusammenbau des optischen Schalters keine mechanischen Anschläge mehr justiert zu werden.

Eine besonders genaue Führung der bewegbaren Siliziumplatte ergibt sich, wenn die Schiene trapezförmigen Querschnitt aufweist.

Um eine gute Haltbarkeit der Oberfläche der Schiene und des komplementär zu der Schiene ausgebildeten Führungselementes zu gewährleisten, ist vorgesehen, daß das Siliziumteil und die bewegbare Siliziumplatte im Bereich der Schienen und im Bereich des Führungselementes an ihrer Oberfläche nitriert sind.

Im folgenden wird die Erfindung anhand eines Ausführungsbeispiels in einer Zeichnung gezeigt und anschließend beschrieben.

Dabei zeigt
- Figur 1: eine Seitenansicht des optischen Schalters,
- Figur 2: eine Aufsicht des Schalters ohne Andruckfeder,
- Figur 3: einen ersten Schnitt und
- Figur 4: einen zweiten Schnitt entlang der jeweils in der Figur 1 bezeichneten Linien. Der Schalter ist jeweils in schematischer Form wiedergegeben.

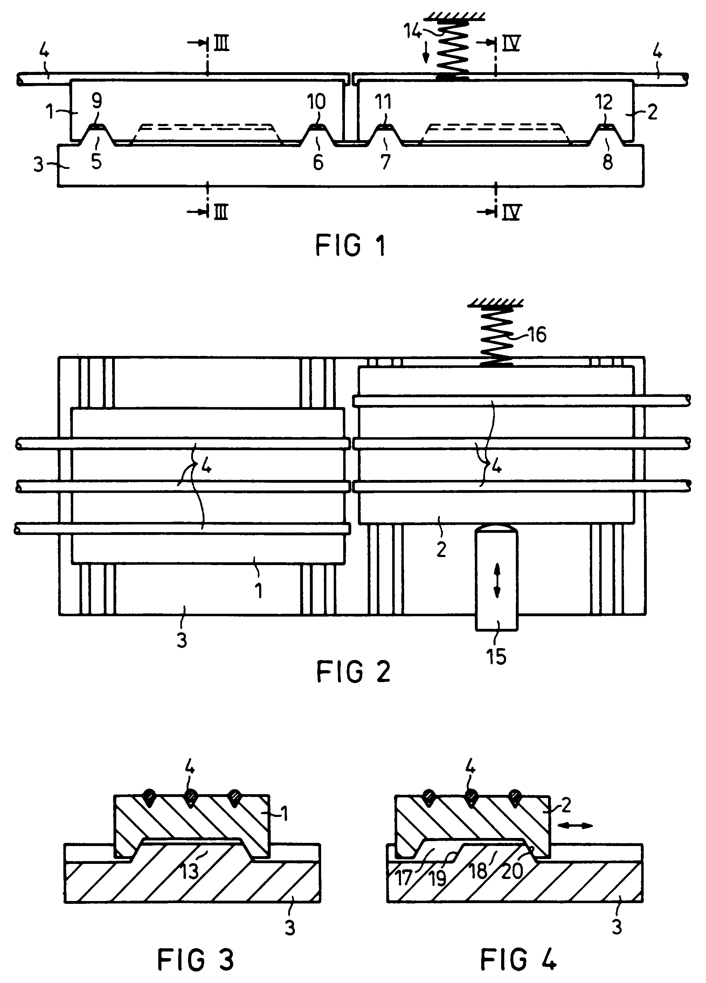

Die ortsfeste Siliziumplatte 1 und die bewegbare Siliziumplatte 2 sind auf einer Grundplatte 3 angeordnet, die ebenfalls aus Silizium besteht. Die ortsfeste Siliziumplatte 1 und die bewegbare Siliziumplatte 2 weisen jeweils an ihrer Oberseite Zentriernuten zur Führung von Lichtwellenleitern 4 auf. Die Grundplatte 3 weist vier quer zur Längsrichtung der Lichtwellenleiter verlaufende Schienen 5, 6, 7, 8 in Form von Vorsprüngen auf. Jede der beiden Siliziumplatten 1, 2 weist Führungselemente 9, 10, 11, 12 in Form von Ausnehmungen auf, die jeweils mit einer der Schienen 5, 6, 7, 8 zusammenwirken. Die ortsfeste Siliziumplatte 1 ist mittels eines Klebers auf der Grundplatte 3 fixiert. Dabei dient der Vorsprung 13 (Fig. 3) der Grundplatte 3 zusammen mit einer entsprechenden Ausnehmung der ortsfesten Siliziumplatte 1 zur genauen Positionierung der ortsfesten Siliziumplatte 1 in Richtung senkrecht zur Längsachse der Lichtwellenleiter 4.

Die bewegbare Siliziumplatte 2 ist durch die Schienen 7, 8 der Grundplatte 3 und die als Ausnehmungen 11, 12 ausgeführten Führungselemente in der Bewegungsrichtung senkrecht zur Längsachse der Lichtwellenleiter 4 präzise geführt. Die Feder 14 bewirkt eine Andruckkraft der bewegbaren Siliziumplatte 2 gegen die Grundplatte 3. Dadurch wirken die Ausnehmungen 11, 12 und die im Querschnitt trapezförmigen Vorsprünge 7, 8 paßgenau und spielfrei zusammen.

Ein Antriebsstößel 15 übertägt die Antriebskraft zur Durchführung einer Schaltbewegung beispielsweise von einem herkömmlichen elektromechnischen Antrieb auf die bewegbare Siliziumplatte 2. Dem Antriebsstößel 15 wirkt eine Rückstellfeder 16 entgegen, die beim Zurückziehen des Antriebsstößels 15 die bewegbare Siliziumplatte 2 diesem nachführt.

Die bewegbare Siliziumplatte 2 weist an ihrer Unterseite eine Ausnehmung 17 (Fig. 4) auf, in die ein Vorsprung 18 der Grundplatte 3 hineinragt. Die bewegbare Siliziumplatte 2 ist gegenüber der Grundplatte 3 so weit beweglich, bis eine Begrenzungsfläche der Ausnehmung 17 der Siliziumplatte 2 an eine der Begrenzungsflächen 19, 20 des Vorsprungs 18 anstößt. Die Begrenzungsflächen 19, 20 wirken jeweils als Anschlag zur Begrenzung einer Schaltbewegung der bewegbaren Siliziumplatte 2.

Der Vorsprung 18 mit seinen Begrenzungsflächen 19, 20 sowie die Siliziumplatte 2 mit ihrer Ausnehmung 17 und den Zentriernuten für die Lichtwelleneleiter sind jeweils in Siliziumätztechnik hochpräzise hergestellt. Bei der Herstellung dieser Siliziumteile lassen sich alle Bemessungen so genau einhalten, daß nach dem Zusammenbau des optischen Schalters die Begrenzungsflächen 19, 20 des Vorsprungs 18 mit der Ausnehmung 17 in der bewegbaren Grundplatte 2 so zusammenwirken, daß die Bewegung der Siliziumplatte 2 auf eine Weise begrenzt wird, die in jeder der beiden Schaltpositionen eine definierte Schaltstellung des optischen Schalters gewährleistet. Die Schaltstellungen sind in Richtung senkrecht zur Längsachse der Lichtwellenleiter 4 auf Bruchteile eines Mikrometers genau einhaltbar, so daß in jeder Schaltstellung die jeweils zu koppelnden Lichtwellenleiter mit genügender Genauigkeit in fluchtende Position bringbar sind.

Dadurch wird nach dem Zusammenbau des optischen Schalters ein Justieren von mechanischen Anschlägen überflüssig. Der Schalter braucht vielmehr nur aus den fertig geätzten Teilen zusammengesetzt zu werden und es ist eine genügend genaue Justierung durch die Bemessung aller Teile gewährleistet.

## Patentansprüche

1. Optischer Schalter mit einer ersten, zur Ausführung eines Schaltvorgangs zwischen verschiedenen Schaltpositionen bewegbaren Siliziumplatte (2), und mit einer zweiten, ortsfesten Siliziumplatte (1), die jeweils V-Nuten zur Zentrierung von Lichtwellenleitern (4) aufweisen und mit einer Vorrichtung (5-8) zur Führung der bewegbaren siliziumplatte (2) bei einer Schaltbewegung,
**dadurch gekennzeichnet**, daß die Vorrichtung zur Führung der bewegbaren Siliziumplatte (2) aus wenigstens einer quer zur Längsachse der Lichtwellenleiter (4) verlaufenden, als Ausnehmung oder Vorsprung eines ortsfesten Teiles (3) ausgebildeten Schiene (7, 8) und einem komplementär zur Schiene (7, 8) ausgebildeten Führungselement (11, 12) der bewegbaren Siliziumplatte (2) besteht.

2. Optischer Schalter nach Anspruch 1,
**dadurch gekennzeichnet**, daß die wenigstens eine Schiene (7, 8) durch Ätzen eines Siliziumteiles (3) geschaffen ist.

3. Optischer Aschalter nach Anspruch 2,
**dadurch gekennzeichnet**, daß das Siliziumteil (3) wenigstens eine Ausnehmung und/oder einen Vorsprung (18) aufweist, deren Begrenzungsflächen (19, 20) wenigstens einen Anschlag für die bewegbare Siliziumplatte (2) bilden.

4. Optischer Schalter nach Anspruch 3,
**dadurch gekennzeichnet**, daß die Vorsprünge oder Ausnehmungen (18) durch Ätzen des Siliziumteils (3) gebildet sind.

5. Optischer Schalter nach Anspruch 2 oder einem der folgenden, **dadurch gekennzeichnet**, daß die ortsfeste Siliziumplatte (1) mit dem Siliziumteil (3) fest verbunden ist.

6. Optischer Schalter nach Anspruch 2 oder einem der folgenden, **dadurch gekennzeichnet**, daß die Schiene (7, 8) trapezförmigen Querschnitt aufweist.

7. Optischer Schalter nach Anspruch 2 oder einem der folgenden, **dadurch gekennzeichnet**, daß das Siliziumteil (3) und die bewegbare Siliziumplatte (2) im Bereich der Schienen (7, 8) und im Bereich des Führungselementes (11, 12) an ihrer Oberfläche nitriert sind.

## Claims

1. Optical switch having a first silicon plate (2) which can be moved between various switching positions in order to carry out a switching procedure, and having a second, fixed silicon plate (1), each of which has V-grooves for the centring of optical waveguides (4) and having a device (5-8) to guide the moveable silicon plate (2) during a switching movement, characterized in that the device for guiding the moveable silicon plate (2) consists of at least one rail (7, 8), extending at right angles to the longitudinal axis of the optical waveguides (4) and constructed as a recess or projection of a fixed part (3), and a guide element (11, 12) of the moveable silicon plate (2) which is constructed to complement the rail (7, 8).

2. Optical switch according to claim 1, characterized in that the at least one rail (7, 8) is created by etching a silicon part (3).

3. Optical switch according to claim 2, characterized in that the silicon part (3) has at least one recess and/or one projection (18), the contact areas (19, 20) of which form at least one stop for the moveable silicon plate (2).

4. Optical switch according to claim 3, characterized in that the projections or recesses (18) are formed by etching the silicon part (3).

5. Optical switch according to claim 2 or one of the following claims, characterized in that the fixed silicon plate (1) is firmly connected to the silicon part (3).

6. Optical switch according to claim 2 or one of the following claims, characterized in that the rail (7, 8) has a trapezoidal cross section.

7. Optical switch according to claim 2 or one of the following claims, characterized in that the silicon part (3) and the moveable silicon plate (2) are nitrated on their surface in the region of the rails (7, 8) and in the region of the guide element (11, 12).

## Revendications

1. Commutateur optique comportant une première plaque (2) de silicium, qui est mobile, pour effectuer une opération de commutation, entre différentes positions de commutation, et une seconde plaque (1) de silicium fixe, ces plaques comportant chacune des rainures en V pour le centrage de guides d'ondes (4) de lumière, ainsi qu'un dispositif (5 à 8) pour guider la plaque (2) de silicium mobile lors d'un mouvement de commutation,
caractérisé par le fait que le dispositif servant à guider la plaque (2) de silicium mobile est constitué d'au moins un rail (7,8), qui s'étend transversalement à l'axe longitudinal des guides d'ondes (4) de lumière et est sous la forme d'un évidement ou d'une saillie d'une partie (3) fixe et d'un élément (11,12) de guidage de la plaque (2) de silicium mobile, cet élément ayant une forme complémentaire de celle du rail (7,8).

2. Commutateur optique suivant la revendication 1, caractérisé par le fait qu'au moins un rail (7,8) est réalisé par gravure d'une pièce (3) de silicium.

3. Commutateur optique suivant la revendication 2, caractérisé par le fait que la pièce (3) de silicium comporte au moins un évidement et/ou une saillie (18), dont les surfaces (19,20) de délimitation forment au moins une butée pour la plaque (2) de silicium mobile.

4. Commutateur optique suivant la revendication 3, caractérisé par le fait que les saillies ou les évidements (18) sont formés par gravure de la pièce (3) de silicium.

5. Commutateur optique suivant la revendication 2 ou l'une des suivantes, caractérisé par le fait que la pièce (1) de silicium fixe est reliée rigidement à la pièce (3) de silicium.

6. Commutateur optique suivant la revendication 2 ou l'une des suivantes, caractérisé par le fait que le rail (7,8) comporte une section transversale trapézoïdale.

7. Commutateur optique suivant la revendication 2 ou l'une des suivantes, caractérisé par le fait que la pièce (3) de silicium et la plaque (2) de silicium mobile sont nitrées, sur leur surface supérieure, dans la région des rails (7,8) et dans la région de l'élément (11,12) de guidage.
